(19) Europäisches Patentamt
European Patent Office
Office européen des brevets

(11) EP 0 535 955 B1

(12) **EUROPEAN PATENT SPECIFICATION**

(45) Date of publication and mention of the grant of the patent:
**08.01.1997 Bulletin 1997/02**

(51) Int Cl.[6]: **C08L 71/12**, C08L 77/00, C08K 3/08, C08K 7/00

(21) Application number: **92308969.2**

(22) Date of filing: **01.10.1992**

# (54) Thermoplastic resin composition

Thermoplastische Harzzusammensetzung

Composition de résine thermoplastique

(84) Designated Contracting States:
**BE DE FR GB IT NL**

(30) Priority: **02.10.1991 US 769436**
**10.01.1992 US 819235**

(43) Date of publication of application:
**07.04.1993 Bulletin 1993/14**

(73) Proprietor: **SUMITOMO CHEMICAL COMPANY LIMITED**
**Osaka-shi, Osaka 541 (JP)**

(72) Inventors:
- **Hagimori, Hiroshi**
**Chiba 299-01 (JP)**
- **Suzuki, Yasuro**
**Chiba 290 (JP)**
- **Kitadono, Kaoru**
**Chiba 299-01 (JP)**
- **Sanada, Takashi**
**Ichihara -shi, CHIBA 299-01 (JP)**

(74) Representative: **Cresswell, Thomas Anthony**
**J.A. Kemp & Co.**
**14 South Square**
**Gray's Inn**
**London WC1R 5LX (GB)**

(56) References cited:
**EP-A- 0 077 059** **EP-A- 0 416 435**

- **DATABASE WPIL Section Ch, Week 9049, 31 March 1989 Derwent Publications Ltd., London, GB; Class A, Page 441, AN 364565**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 535 955 B1

Printed by Jouve, 75001 PARIS (FR)

## Description

The present invention relates to a novel resin composition having improved resistance to discoloration caused by exposure to light, which comprises:

(a) a polyphenylene ether alone or in combination with a styrene polymer,

(b) a polyamide,

(c) optionally one or more agents to improve the impact resistance,

(d) optionally one or more agents to improve the compatibility of the polyphenylene ether and the polyamide, and

(e) metal particles having a weight average particle size of 10 μm or less and an aspect ratio of 3 or more.

Blends of polyphenylene ether and polyamide have long been known. U.S.P. 3,379,792 taught improved processability of polyphenylene ethers by incorporating therein up to 25% by weight of polyamide.

Recently compatibility of such blends has been enhanced by incorporating therein a compatibilizing agent.

U.S.P. 4,315,086 teaches the use of liquid diene polymers, epoxy compounds and compounds having in the molecule both (a) a carbon-carbon double bond or a carbon-carbon triple bond and (b) a carboxylic acid, acid anhydride, acid amide, imide, carboxylic acid ester, amino or hydroxyl group as compatibilizers. EP 46040 teaches copolymers of vinyl aromatic compounds and either an alpha, beta-unsaturated dicarboxylic acid anhydride or an imide compound thereof as a compatibilizer.

USP 4,659,763 teaches the use of quinone compounds, USP 4,600,741 teaches the use of trimellitic anhydride acid chloride and the like, USP 4,659,760 teaches the use of oxidized polyethylene wax, WO 85/05372 teaches the use of polycarboxylic acids such as citric acid, WO 87/07281 teaches the use of vinyltrimethoxy silane as compatibilizers.

It is also known to add various rubbery polymers and copolymers to further enhance the impact strength of the foregoing compatibilized polyphenylene ether/polyamide blends.

While the foregoing polyphenylene ether-polyamide blends exhibit enhanced melt flow property, improved chemical resistance, and if compatibilized, excellent mechanical properties, they have one big drawback in that they can be readily discolored by exposure to light. Further the discoloration can be observed even in the case of a fabricated article whose surface is coated by a paint coat layer depending on the thickness and color of the layer.

Therefore it is an object of the present invention to provide a polyphenylene ether-polyamide composition having an improved discoloration resistance.

Blends of a polyphenylene ether and a metal powder have also long been known. USP No. 4,404,125 teaches a polyphenylene ether-polystyrene composition wherein aluminium powder and carbon black are incorporated, having higher electroconductivity.

However, no mention was made as to the improvement of the discoloration resistance.

It has been quite unexpectedly discovered that the discoloration resistance of a polyphenylene ether-polyamide composition can be improved by incorporating metal particles therein defined below.

According to the present invention, a polyphenylene ether-polyamide composition having unexpectedly improved resistance to discoloration caused by exposure to light may be prepared by incorporating a discoloration-improving quantity of metal particles having a weight average particle size of 10 μm or less and an aspect ratio of 3 or more in the polyphenylene ether/polyamide composition.

In general the composition of the present invention is prepared from:

(i) a resin composition comprising:

(a) at least one polyphenylene ether alone or in combination with a styrene polymer,

(b) at least one polyamide,

(c) optionally one or more agents to improve the impact strength of the composition, and

(d) optionally one or more agents to improve the compatibility of the polyphenylene ether and the polyamide; and

(ii) metal particles having a weight average particle size of 10 μm or less and an aspect ratio of 3 or more.

The composition of the present invention will generally be prepared from 5 to 95, preferably 30 to 70, percent by weight of a polyphenylene ether alone or in combination with a styrene polymer (a), and from about 5 to 95, preferably 30 to 70, percent by weight of a polyamide (b), and from about 0.1 to about 10, preferably from about 0.5 to about 5, parts by weight of metal particles based on 100 parts by weight of the total of the polyphenylene ether and the polyamide.

When employed, one or more of the compatibilizing agents will be used in an amount of from about 0.01 to 30, preferably from about 0.1 to about 5, parts by weight based on 100 parts by weight of the total of the polyphenylene ether and the polyamide. When employed, the agent to improve impact strength will be used in an amount of from about 2 to about 50 parts, preferably from about 5 to about 30 parts, by weight based on 100 parts by weight of the total of the polyphenylene ether and the polyamide.

The polyamide is preferably present in an amount from 35 percent by weight to 80 percent by weight based on the total weight of the polymeric components (a), (b) and (c) defined above.

The polyphenylene ether is preferably present in an amount from 20 percent by weight to 65 percent by weight based on the total weight of the polymeric components (a), (b) and (c) defined above.

The polyphenylene ether used in the present invention is a homopolymer or copolymer composed of the following repeating unit (I) or (I) and (II):

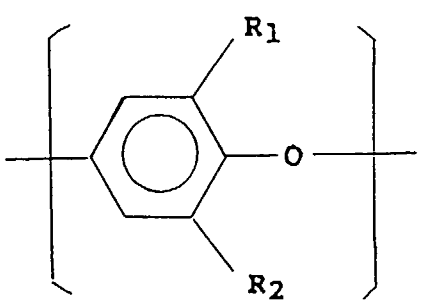

(I)

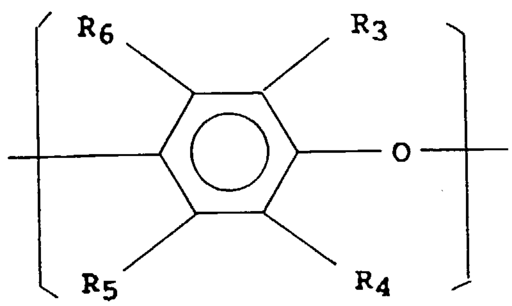

(II)

wherein $R_1$, $R_2$, $R_3$, $R_4$ $R_5$ and $R_6$ which may be identical or different each represents a monovalent residue such as an alkyl group of 1 - 4 carbon atoms excluding tert-butyl group, an aryl group, a halogen atom or a hydrogen atom, and $R_3$ and $R_5$ cannot be simultaneously hydrogen atom.

The polyphenylene ether may be a mixture of said homopolymer and said copolymer, or a graft copolymer of said polymer with styrene.

The homopolymer of polyphenylene ether includes poly(2,6-dimethyl-1,4-phenylene)ether, poly(2-methyl-6-ethyl-1,4-phenylene)ether, poly(2,6-diethyl-1,4-phenylene)ether, poly(2-ethyl-6-n-propyl-1,4-phenylene)ether, poly(2,6-di-n-propyl-1,4-phenylene)ether, poly(2-methyl-6-n-butyl-1,4-phenylene)ether, poly(2-ethyl-6-isopropyl-1,4-phenylene) ether, poly(2-methyl-6-chloro-1,4-phenylene)ether, poly(2-methyl-6-hydroxyethyl-1,4-phenylene)ether, and poly (2-methyl-6-chloroethyl-1,4-phenylene)ether.

The copolymer of polyphenylene ether includes polyphenylene ether copolymers mainly composed of polyphenylene ether structure which is obtained by copolymerization with o-cresol or an alkyl-substituted phenol such as 2,3,6-trimethylphenol which is represented by the formula (III):

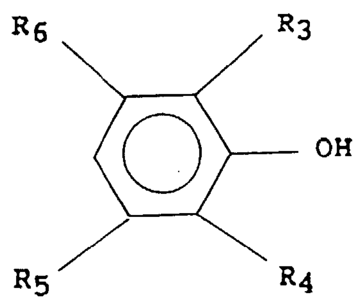

(III)

wherein $R_3$, $R_4$, $R_5$ and $R_6$ each represents a monovalent residue such as an alkyl group of 1 - 4 carbon atoms excluding tert-butyl group, an aryl group, a halogen atom or a hydrogen atom, and R3 and R5 cannot be simultaneously hydrogen atom. The copolymer of polyphenylene ether may, for example, be a copolymer of 2,6-dimethylphenol and 2,3,6-trimethylphenol.

The polyphenylene ether is preferably selected from poly(2,6-dimethyl-1,4-phenylene) ether and a copolymer of 2,6-dimethylphenol and 2,3,6-trimethylphenol.

The polyamide component (b) used in the present invention is well known in the art and may be selected from any of aliphatic polyamides or thermoplastic aromatic copolyamides or a combination thereof. The aliphatic polyamides have a molecular weight of 10,000 or more and can be produced by bonding of equimolar quantities of a saturated aliphatic dicarboxylic acid of 4 - 12 carbon atoms and an aliphatic diamine of 2 - 12 carbon atoms. However, in the production, if necessary, the diamines may be used in excess so as to provide more amine terminal groups than carboxyl terminal groups in the polyamide, or alternatively, a dibasic acid may be used in excess so as to provide more acid groups. Similarly, these polyamides can be conveniently produced from acid production derivatives and amine production derivatives such as esters, acid chlorides and amine salts, of the above mentioned acids and amines.

Typical examples of the aliphatic dicarboxylic acid used for the production of the polyamides include adipic acid, pimelic acid, azelaic acid, suberic acid, sebacic acid and dodecanedioic acid.

On the other hand, typical examples of the aliphatic diamines include hexamethylenediamine and octamethylenediamine, and the like.

In addition, the aliphatic polyamides may also be produced by self-condensation of lactam.

Examples of the aliphatic polyamides are polyhexamethylene adipamide (nylon 66), polyhexamethylene azelamide (nylon 69), polyhexamethylene sebacamide (nylon 610), polyhexamethylene dodecanamide (nylon 612), poly-bis-(p-aminocyclohexyl)methane dodecanoamide, polytetramethylene adipamide (nylon 46) and polyamides produced by ring cleavage of lactam such as polycaprolactam (nylon 6) and polylauryl lactam. Furthermore, there may be used polyamides produced by polymerization of at least two amines or acids selected from those used for the production of the above-mentioned polymers, for example, polymers produced from adipic acid, sebacic acid and hexamethylenediamine. The aliphatic polyamides further include blends of above-mentioned polyamides such as a blend of nylon 6 and nylon 66 including copolymers such as nylon 66/6. Nylon 11 may also be used.

The polyamide is preferably selected from nylon 6, nylon 66, nylon 46, nylon 610, nylon 612, nylon 11 and nylon 12.

Preferably, the aliphatic polyamides used in the present invention are polyhexamethylene adipamide (nylon 66), polycaprolactam (nylon 6) and a blend of polyhexamethylene adipamide (nylon 66) with poly-caprolactam (nylon 6).

The thermoplastic aromatic copolyamide is a copolyamide containing an aromatic component therein, for example, polyhexamethylene isophthalamide (nylon 6I). The copolyamide containing an aromatic component therein means a melt-polymerizable polyamide containing as a main component an aromatic amino acid and/or an aromatic dicarboxylic acid such as para-aminomethylbenzoic acid, para-aminoethylbenzoic acid terephthalic acid and isophthalic acid.

Diamines which may constitute another component of the polyamide include hexamethylenediamine, undecamethylenediamine, dodecamethylenediamine, 2,2,4-/2,4,4-trimethylhexamethylenediamine, m-xylylenediamine, p-xylylenediamine, bis(p-aminocyclohexyl)methane, bis(p-aminocyclohexyl)propane, bis(3-methyl-4-aminocyclohexyl) methane, 1,3-bis(aminomethyl) cyclo-hexane and 1,4-bis(aminomethyl)cyclohexane. An isocyanate may also be used in place of the diamine.

Any other comonomers may be used, if necessary. Examples of the comonomers are 4,4'-diphenylmethane diisocyanate and tolylene diisocyanate. Other examples thereof are a unit of lactam, a unit of ω-amino acid of 4 - 12 carbon atoms, a compound derived from an aliphatic dicarboxylic acid of 4 - 12 carbon atoms and an aliphatic diamine of 2 - 12 carbon atoms, for example, lactams and amino acids such as ε-caprolactam, ω-caprolactam, 11-aminoundecanoic acid and 12-aminododecanoic acid, and equimolar salts of the above-mentioned various diamines and adipic acid, azelaic acid or sebacic acid.

Typical examples of the thermoplastic aromatic copolyamides comprising these components are copolymer polyamides of p-aminomethylbenzoic acid and ε-caprolactam (nylon AMBA/6), polyamides mainly composed of 2,2,4-/2,4,4-trimehylhexamethylene·terephthalamide (nylon TMDT and nylon TMDT/61), polyamides mainly composed of hexamethylelene· isophthalamide and/or hexamethylene·terephthalamide and containing, as a comonomer, bis(p-aminocyclohexyl) methane·terephthalamide, and/or bis(3-methyl-4-aminocyclohexyl) methane·isophthalamide and/or bis (3-methyl-4-aminocyclohexyl) propane·isophthalamide and/or bis(p-aminocyclohexyl) propane·terephthalamide (nylon 6I/PACM I, nylon 6I/DMPACM I, nylon 6I/PACP I, nylon 6I/6T/PACM I/PACM T, nylon 6I/6T/DMPACM I/DMPACM T, nylon 6I/6T/PACP I/PACP T), polyamides mainly composed of hexamethylene. isophthalamide or hexamethylene·terephthalamide and containing, as a comonomer, ε-caprolactam, 12-aminododecanoic acid, hexamethylene·adipamide, bis(p-aminocyclohexyl)methane· adipamide or bis(3-methyl-4-aminocyclohexyl)methane adipamide (nylon 6I, 6I/6T, 6I/12, 6T/6, 6T/66, 6I/PACM 6, 6I/DMPACM 6), and polyamides mainly composed of bis(p-aminocyclohexyl) methane·isophthalamide or bis(3-methyl-4-aminocyclohexyl)methane-isophthalamide and containing, as a comonomer, hexamethylene·dodecanedioamide or 12-amino-dodecanoic acid (nylon PACM I/612 and nylon DMPACM I/12)

The aromatic nuclear-hydrogenated copolyamide of component (b) is an alicyclic copolyamide obtained by using cyclohexane 1,4-dicarboxylic acid or cyclohexane 1,3-dicarboxylic acid obtained by nuclear-hydrogenation of terephthalic acid or isophthalic acid in place of terephthalic acid or isophthalic acid which is an acid component of the above-mentioned aromatic copolyamides. Furthermore, a nuclear hydrogenation product of a diamine or diisocyanate, such as 4, 4'-diphenylmethane diisocyanate or tolylene diisocyanate, may also be used as a monomer.

Examples of metal particles having a weight average particle size of 10μm or less and an aspect ratio or 3 or more used for the practice of the present invention are flakes or powders of aluminium, magnesium, zinc, stainless steel, nickel, manganese, copper or the like. Most preferred metal particles are flakes or powders of aluminium preferably having an aspect ratio of 5 or more. The particles are present in an amount effective for improving the discoloration resistance of the resin composition.

Compatibilizing agents that may be employed in the practice of the present invention are present in a compatibilising amount. Examples of such agents are:

(a) liquid diene polymers,
(b) epoxy compounds,
(c) unsaturated functional compounds,
(d) aliphatic polycarboxylic acid compounds or the derivatives thereof as described hereunder,
(e) polyfunctional acid halide compounds as described hereunder, and
f) copolymers of vinyl aromatic compound and either an α-β unsaturated dicarboxyl acid anhydride or an imido compound thereof.

Liquid diene polymers suitable for use herein include homopolymers of a conjugated diene and copolymers of a conjugated diene with at least one monomer selected from the group consisting of other conjugated dienes, vinyl monomers, e.g. ethylene, propylene, butene-1, isobutylene, hexene-1, octene-1 and dodecene-1, and mixtures thereof, having a number average molecular weight of from 150 to 10,000 preferably 150 to 5,000. These homopolymers and copolymers include, among others, polybutadiene, polyisoprene, poly(1,3-pentadiene), poly(butadiene-isoprene), poly (styrene-butadiene), polychloroprene, poly(butadiene-alpha methyl styrene), poly(butadiene-styrene-isoprene) and poly(butylene-butadiene).

Epoxy compounds suitable for use in the practice of the present invention there are given (1) epoxy resins produced by condensing polyhydric phenols (e.g. bisphenol-A, tetrabromobisphenol-A, resorcinol and hydroquinone) and epichlorohydrin; (2) epoxy resins produced by condensing polyhydric alcohols (e.g. ethylene glycol, propylene glycol, butylene glycol, polyethylene glycol, polypropylene glycol, pentaerythritol and trimethylolethane and the like) and epichlorohydrin; (3) glycidyletherified products of monohydric compounds including phenyl glycidylether, allyl glycidylether, butyl glycidylether and cresyl glycidylether; (4) glycidyl derivatives of amino compounds for example, the diglycidyl derivative of aniline, and (5) epoxidized products of higher olefinic or cycloalkene, or natural unsaturated oils (e.g. soybean oil) as well as of the foregoing liquid diene polymers.

The unsaturated functional compounds are those having in the molecule both (a) an ethylenic carbon-carbon double bond or a carbon-carbon triple bond and (b) at least one carboxylic acid, acid anhydride, acid halide, acid halide anhydride, acid amide, acid ester, imido, amino, or hydroxy group. Examples of such unsaturated polyfunctional compounds are maleic acid; maleic anhydride; fumaric acid; citranoic acid; itaconic acid; maleimide; maleic hydrazine; reaction products resulting from a diamine and maleic anhydride, maleic acid and fumaric acid; dichloromaleic anhydride; maleic acidamide; unsaturated monocarboxylic acid (such as acrylic acid, butenoic acid, methacrylic acid, t-butylacrylic acid, pentenoic acid); decenoic acids, undecenoic acids, dodecenoic acids, linoleic acid,); esters, acid amides or anhydrides of the foregoing unsaturated carboxylic acids including glycidyl(meth)acrylate; unsaturated alcohols (such as allyl alcohol, crotyl alcohol, methyl vinyl carbonol, 4-pentene-1-ol, 1,4-hexadiene-3-ol, 3-butene-1,4-diol, 2,5-dimethyl-3-hexene-2,5-diol and alcohols of the formula $C_nH_{2n-5}OH$, $C_nH_{2n-7}OH$ and $C_nH_{2n-9}OH$, wherein n is a positive integer up to 30), unsaturated amines resulting from replacing the -OH group(s) of the above unsaturated alcohols with $NH_2$ groups; and functionalized diene polymers and copolymers.

The aliphatic polycarboxylic acid compounds or the derivatives thereof suitable are represented by the formula:

$$(R^IO)_mR(COOR^{II})_n(COOR^{III}R^{IV})s$$

wherein R is a linear or branched chain, saturated aliphatic hydrocarbon of from 2 to 20, preferably 2 to 10 carbon atoms; $R^I$ is selected from the group consisting of hydrogen or an alkyl, aryl, acyl or carbonyl dioxy group of 1 to 10, preferably 1 to 6, most preferably 1 to 4 carbon atoms, especially preferred is hydrogen; each $R^{II}$ is independently selected from the group consisting of hydrogen or an alkyl or aryl group of from 1 to 20 carbon atoms, preferably from 1 to 10 carbon atoms; each $R^{III}$ and $R^{IV}$ is independently selected from the group consisting essentially of hydrogen or an alkyl or aryl group of from 1 to 10, preferably from 1 to 6, most preferably 1 to 4 carbon atoms; m is equal to 1 and (n + s) is greater than or equal to 2, preferably equal to 2 or 3, and n and s are each greater than or equal to zero and wherein ($OR^I$) is alpha or beta to a carbonyl group and at least two carbonyl groups are separated by 2 to 6 carbon atoms. Obviously, $R^I$, $R^{II}$, $R^{III}$ and $R^{IV}$ cannot be aryl when the respective substituent has less than 6 carbon atoms.

Illustrative examples of suitable polycarboxylic acids are citric acid, malic acid, and agaricic acid.

The polyfunctional acid halide compounds suitable for use herein are characterized as having both (a) at least one acid halide group, preferably acid chloride group and (b) at least one carboxylic acid, carboxylic acid anhydride, acid ester or acid amide group, preferably a carboxylic acid or carboxylic acid anhydride group. Examples of compatibilizers within this group are trimellitic anhydride acid chloride and chloroformyl succinic anhydride.

Examples of the agents to improve the impact strength that may be employed in the practice of the present invention are:

a) polyolefins,
b) ethylene/ olefin copolymer rubbers,
c) ethylene/ olefin/polyene terpolymer rubbers,
d) functionalized aforementioned olefin polymers by grafting at least one unsaturated functional compound thereto,
e) styrene grafted ethylene/ olefin/polyene terpolymer rubbers,
f) styrene/acrylonitrile or methylmethacrylate grafted ethylene/ olefin/polyene terpolymer rubbers,
g) copolymers or terpolymers of ethylene and at least one unsaturated functional compound,
h) diene rubbers,
i) hydrogenated or nonhydrogenated block copolymers of vinyl-aromatic compound and diene.

Polyolefins suitable for use in the practice of the present invention include high density polyethylene, low density polyethylene, linear low density polyethylene, polypropylene, crystalline propylene ethylene copolymer, polybutene-1, polymethylpentene-1 and polyisobutylene. Ethylene/olefin copolymer rubbers for use in the practice of the present invention include ethylene/propylene copolymer rubber, often called EPR, and ethylene/butene-1 copolymer rubber. Ethylene/ olefin/polyene terpolymer rubbers for use in the practice of the present invention include ethylene/propylenelethylidenenorbornene terpolymer rubber ethylene/propylene/dicyclopentadiene terpolymer rubber and ethylene/propylene/1,4 hexadiene terpolymer rubber often called EPDM. Functionalized olefin polymers useful for the practice of the present invention include olefin polymers described in the above a), b), and c) with at least one unsaturated functional compound grafted thereto. The illustrative examples of the unsaturated functional compounds are acrylic acid, methacrylic acid, alkylester derivatives thereof, such as methyl(meth)acrylate, ethyl(meth)acrylate and butyl (meth)acrylate, dicarboxylic acid or acid anhydride such as fumaric acid, maleic acid, maleic anhydride and itaconic acid, acrylamide, N-(hydroxymethyl)acrylamide, glycidyl derivatives of (meth)acrylic acid such as glycidyl (meth)acrylate, vinyl acetate, vinyl chloride and styrene. Method for the grafting of an unsaturated functional compound to the olefin polymers is not critical in the practice of the present invention and any known method in the art may be employed. Melt mixing of the olefin polymers and the unsaturated functional compounds with a suitable amount of a free radical initiator may be employed. Grafting of an unsaturated (functional) compound under an aqueous suspension of olefin polymers with a suitable amount of a free radical initiator and a dispersing agent may also suitably be employed. Copolymers or terpolymers of ethylene and at least one unsaturated functional compound useful for the practice of the present invention include ethylene/(meth)acrylic acid copolymer ethylene/alkyl(meth)acrylate copolymer, ethylene/vinylacetate copolymer, ethylene/alkyl(meth)acrylate/ maleicanhydride terpolymer and ethylene/methyl(meth)acrylate/glycidyl(meth)acrylate terpolymer.

Diene rubbers useful for the practice of the present invention include polybutadiene, styrene butadiene random copolymer, often called SBR, natural rubber and polyisoprene.

Hydrogenated or nonhydrogenated block copolymers of vinyl aromatic compound and diene are well known in the art. Illustrative examples of the block copolymers are styrene butadiene diblockcopolymer, styrene isoprene diblock copolymer, styrene butadiene styrene triblock copolymer, styrene isoprene styrene triblock copolymer, radial teleblock copolymers of styrene and butadiene and hydrogenated products of the foregoing block copolymers. The foregoing impact strength improver may be used alone or in any combination of one another.

The foregoing polyphenylene ether polyamide blends may further comprise inorganic fillers such as talc, aluminosilicate, mica, carbon black, glass fiber and the like, pigments, heat stabilizers, ultraviolet degradation inhibitors, antioxidants, flame retardants and plasticizers.

The present invention also provides a fabricated article for outdoor use made from the resin composition according to the invention.

The molded products obtained from the thermoplastic resin composition of the present invention can also be used suitably for automobile parts and electrical and electronic parts.

As examples of automobile parts to which the composition of the present invention can be applied, mention may be made of exterior trim parts such as bumper, fender, apron, hood panel, fascia, rocker panel, rocker panel reinforce, floor panel, rear quarter panel, door panel, door support, roof top, and trunk lid, interior trim parts such as instrument panel, console box, glove box, shift knob, pillar garnish, door trim, handle, arm rest, wind louver, carpet, seat belt, and seat, interior parts of engine room such as distributor cap, air cleaner, radiator tank, battery case, radiator shroud, washer tank, cooling fan, and heater case, mirror body, wheel cover, trunk trim, trunk mat and the like.

The following examples further illustrate the present invention, but the present invention is not limited to them.

In the preparation of the polyphenylene ether polyamide blends disclosed in the examples herein, a twin screw extruder TEM-50 made by Toshiba KIKAI Kabushiki Kaisha was used.

The extruder had L/D ratio of 36 and was equipped with a first feed opening at the position of L/D ratio of 1 and with a second feed opening at the position of L/D ratio of 18. (L: the length of the screw, D: the diameter of the screw)

The cylinder temperature was set at about 260°C and screw speed was set at 360 rpm. The formulation of the individual blend was shown in Table 1. The degree of discoloration measured of each blend was also shown in Table-1.

In Table-1, metal particles, compatibilizer, and free radical initiator were shown in parts by weight per 100 parts of the total of the polymeric materials and each of the polymeric materials was shown in weight % of the total of the polymeric materials.

The ingredients listed in the column "Feed-1" of Table-1 were fed from the first feed opening. The ingredients listed in the column "Feed-2"of Table-1 were fed from the second feed opening. All ingredients fed together either from the first feed opening or the second feed opening were mixed well by a tumbler mixer prior to the feeding.

The feed rate of the first feed and the second feed were controlled by the automatic weight feed control system so as to maintain the formulation of the individual blend as specified in Table-1.

The polyphenylene ether employed in the examples was polyphenylene ether having a reduced viscosity of 0.56 dl/g, (hereinafter denoted as PPE measured at 25°C in a chloroform solution of 0.5 g/dl concentration manufactured by Nippon Polyether Kabushiki Kaisha.

The nylon 6, if employed, was Unitika Kabushiki Kaisha's Nylon 6 A1030 BRL throughout the examples. The nylon 66, if employed, was UBE Kosan Kabushiki Kaisha's UBE nylon 66 2015B.

The aromatic polyamides in the examples, if employed, was either EMS Chemie's Grivory® XE3038 or Huels AG's Trogamid® T 2010.

The free radical initiator, if employed, was dicumyl peroxide, Sanperox® DCP made by Sanken Kako Kabushiki Kaisha. The free radical initiator, if employed, was always preblended with polyphenylene ether and fed from the first feed opening. Polyphenylene ether was always fed from the first feed opening and polyamides were always fed from the second opening.

The agent to improve the impact strength used in the examples were as follows.

1) Styrene grafted EPDM denoted hereinafter as Sg-EPDM, if employed in any of the examples herein, was prepared in the following manner.

In a 100 liter stainless steel autoclave, 10 Kg of finely crashed EPDM (Esprene® 502 made by Sumitomo Chemical co., Ltd.) and 45 Kg of demineralized water were fed and intensively stirred by a stirrer. While stirring, a solution of 75 grams of benzoyl peroxide in 4 Kg of styrene, and a solution of 400 grams of polyvinylalcohol (Gosenol GL-05) as a dispersion stabilizer in 10 Kg of demineralized water were added in order. The mixture was stirred for one hour at a room temperature to render the impregnation of styrene and the free radical initiator into the EPDM. Then the grafting reaction was allowed at 90 degree centigrade for 6 hours and subsequently at 115 degree centigrade for 2 hours.

After the reaction was over, the resulting product was filtered, washed with demineralized water and dried to obtain about 14 Kg of styrene grafted EPDM (Sg-EPDM). Thus obtained Sg-EPDM contained about 29 weight percent of polystyrene of which about 8 weight percent was ungrafted free homopolystyrene.

2) Styrene/acrylonitrile grafted EPDM denoted hereinafter as SAg-EPDM, if employed in any of the examples herein; was prepared in the following manner.

In a 100 liter stainless steel autoclave, 10 Kg of EPDM (Esprene® E502 made by Sumitomo Chemical Co., Ltd.) and 45 Kg of demineralized water were fed and intensively stirred by a stirrer.

While stirring, a solution of 75 grams of benzoyl peroxide in 3.35 Kg of styrene and 0.2 Kg of acrylonitrile, and a solution of 400 grams of polyvinyl alcohol (Gesenol GL-05 made by Nihon Gosei Co., Ltd.) as a dispersion stabilizer in 10 Kg of demineralized water were added, in order.

The mixture was stirred for one hour at a room temperature to render the impregnation of styrene, acrylonitrile and benzoyl peroxide into the EPDM. Then, the grafting reaction was allowed at 90 degree centigrade for 6 hours and subsequently at 115 degree centigrade for 2 hours.

After the reaction was over, the resulting product was filtered, washed with water and dried to obtain about 13.3 Kg of Graft Rubber (SAg-EPDM).

3) Shell Kagaku's Kraton D1101, if employed in any of the examples, was used as a styrene butadiene triblock copolymer denoted hereinafter as SBS.

4) Shell Kagaku's Kraton G1651, if employed in any of the examples, was used as a hydrogenated styrene butadiene styrene triblock copolymer denoted hereinafter as SEBS. Polystyrene, if employed in any of the examples herein was either Nippon Polystyrene Kabushiki Kaisha's Esbrite® 500HR-Y3 (highimpact polystyrene denoted as HIPS hereinafter).

Metal particles used in the examples herein were as follows.

1) Aluminium flakes:

aluminium flake color concentrate

manufactured by Sumika Color Kabushiki Kaisha, denoted as SPEM-8E408 containing 30 weight % of aluminum flake having average particle size of about 5 microns and aspect ratio of 5.

2) Copper flakes:

reagent grade copper flake having particle size under 350 mesh manufactured by Wako Junyaku Kogyo Kabushiki Kaisha.

It should be reasonably expected that a smaller particle sized metal powder should give a better discoloration resistance.

Example 1

20 kg of the PPE and 5 kg of SBS as prescribed in the Feed-1 column of Example-1 of Table-1, were premixed using a 100 liter tumbler mixer for 3 minutes, prior to feeding to the first feed opening of TEM-50 twin screw extruder. The premix prepared for the first feed opening will be referred to as the first feed premix hereinafter 25 kg of the nylon 6 and 2.5 kg of SPEM-8E408 as prescribed in the Feed-2 column of Example-1 of Table-1 using the tumbler mixer for 3 minutes prior to the feeding to the second feed opening of TEM-50 twin screw extruder.

The premix prepared for the second feed opening will be referred to as the second feed premix hereinafter. The cylinder temperature of the extruder was set at about 260°C and the screw speed at about 300 rpm.

The first feed premix was fed to the first feed opening and the second feed premix, to the second feed opening, in one hour simultaneously.

The resulting melt blend was cooled in a water bath by chilled water of about 10°C and pelletized and dried. Thus prepared blend granules were injection molded to make 2 plates of 40 mm x 40 mm x 3 mm test plates.

The test plates were exposed to ultra violet rays having the wave length ranging from 290 to 459 nm and the intensity of 100 mW/cm$^2$ for 69 hours at 63°C, using Eysper UV Tester manufactured by Iwasaki Denki Kabushiki Kaisha. After the exposure was completed, the degree of discoloration was measured of each plate using Macbeth Co., Ltd.'s spectrocolorimeter "Macbeth Color Eye MS-2020+", and ΔE was calculated according to the CIE 1976 color difference formula as follows;

$$\Delta E = [(\Delta L^*)^2 + (\Delta a^*)^2 + (\Delta b^*)^2]^{1/2}$$

Wherein

$$\Delta L^* = L^*_{-1} - L^*_{-2}$$

$$\Delta a^* = a^*_{-1} - a^*_{-2}$$

$$\Delta b^* = b^*_{-1} - b^*_{-2},$$

and

$L^*_{-1}$, $a^*_{-1}$, and $b^*_{-1}$ are brightness, degree of red, and degree of yellow respectively measured, of each plate using the spectrocolorimeter prior to the exposure test, and $L^*_{-2}$, $a^*_{-2}$ and $b^*_{-2}$ are ones measured of each plate after the exposure test. Average of $\Delta$ E of the two plates is shown in Table-1.

Comparative example-1

The experiments were conducted in the same manner as in Example-1 except that aluminium flakes were substituted with 1.5 kg of the gray pigment (PAM8E626 manufactured by Sumikacolor K.K.].

Example-2

The experiments were conducted in the same manner as in Example-1 except that 0.25 kg of maleic anhydride and 50 grams of dicumyl peroxide, the free radical initiator were added in the Feed-1 premix.

Example-3

The experiments were conducted in the same manner as in Example-2 except that 5 kg of aluminium flakes were added instead of 2.5 kg of SPEM-8E408 in the Feed 2 premix.

Example-4

The experiments were conducted in the same manner as in Example-3 except that 10 weight percent out of 40 weight percent of PPE was substituted with 10 weight percent of HIPS.

Example-5

The experiments were conducted in the same manner as in Example-3 except that SBS was substituted with EPSA.

Example-6

The experiment were conducted in the same manner as in Example-2 except that the nylon 6 was substituted with the nylon 66 and SBS with EPS.

Comparative example-2

The experiment were conducted in the same manner as in example-2 except that aluminium powder was substituted with the gray pigment.

Example-7

The experiment were conducted in the same manner as in Example-2 except that SBS was substituted with SEBS, maleic anhydride with citric acid.

Example-8

The experiments were conducted in the same manner as in Example-7 except that 2.5 kg of SPEM-8E408 was

substituted with 0.75 kg of the copper flakes.

Example-9

50 kg of gray pigmented Noryl GTX-600, a compatibilized PPE/PA blend made and sold by GE Plastics Japan, and 2,5 kg of SPEM-8E408 was premixed by the tumbler mixed and then melt extruded using TEM-50 twin screw extruder feeding the premix to the first feed opening.

The resulting granules were injection molded to make the 40 mm x 40 mm x 3 mm test plates and the degree of discoloration was measured in the same manner as in the previous examples.

Comparative example-3

The same Noryl GTX600 was injection molded, without adding metal flakes, to make the test plates and the degree of discoloration was measured.

Example-10

The experiments were conducted in the same manner as in example-9 except that Noryl GTX was substituted with gray pigmented Xylon A1400, a compatibilized PPE/PA blend, made and sold by Asahi Kasei Kogyo Kabushiki Kaisha.

Example-11

Additional two test plates were injection molded using the PPE/PA blend prepared in Example-3.

The plates were subjected to paint spray to form a paint layer of about 5 microns, which were then cured for 30 minutes at 70°C in an infrared paint cure oven. The paint used was "Origiplate Z-NY metalic silver" manufactured by Origin Denki Kabushiki Kaisha. Thus cured plates were subjected to ultra violet ray and the degree of discoloration was measured of the plates in the same manner as in the previous examples.

Comparative example-4

The experiments were conducted in the same manner as in Example-1 except that the PPE/PA blend prepared in Example-3 was substituted with the one prepared in Comparative example-2.

<Extraction test>

In order to show the difference between a compatibilized PPE/PA blend and an uncompatibilized PPE/PA blend.

The following extraction test was conducted, using the PPE/PA blends of comparative example-1, example-2, comparative example-3 (Noryl GTX-600), and Example-10 (Xylon A1400).

The weight percentage of non extractable (denoted as NE) measured of the four blends were shown in Table-1.

Procedure of Extraction Test:

1) 5 g of the pulverized resin composition was . extracted by Soxlehlet's extraction method using chloroform as extraction solvent for 9 hours.

2) Subsequently, the non-extractable residue was further extracted with 2,2,2-trifluoroethanol for 18 hours in the same manner as Step 1.

3) Subsequently, the non-extractable residue was extracted with chloroform again for 9 hours in the same manner as Step 1.

4) Finally, the non-extractable residue was dryed under vacuum at 100°C for 5 hours and was weighed.

Resin compositions which have a non-extractable residue comprising polyphenylene ether and polyamide which is insoluble in chloroform and 2,2,2-trifluoroethanol and is present in an amount of more than 5 percent by weight based on the total weight of the polymeric components (a), (b) and (c) are preferred.

Table-1

| | Feed-1 | | | | | | | | Feed-2 | | | | | ΔE | NE |
|---|---|---|---|---|---|---|---|---|---|---|---|---|---|---|---|
| | PPE | HIPS | Compatibilizer | | Initiator | | Impact Modifier | | PA6 | PA66 | Pigment | Metal Powder | | | |
| | | | Identity | Amount | Identity | Amount | Identity | Amount | | | PAMBE 620 | Identity | Amount | | |
| Example 1 | 40 | | | | | | SBS | 10 | 50 | | | SPEM -8E408 | 5 | 5.8 | 0 |
| Comparative example 1 | 40 | | | | | | SBS | 10 | 50 | | 3 | | | 11.6 | |
| Example 2 | 40 | | MAH | 0.5 | Dicumyl Peroxide | 0.1 | SNBS | 10 | 50 | | | SPEM -8E408 | 5 | 5.7 | 16 |
| Example 3 | 40 | | MAH | 0.5 | Dicumyl Peroxide | 0.1 | SBS | 10 | 50 | | | SPEM -8E408 | 10 | 4.0 | |
| Example 4 | 30 | 10 | MAH | 0.5 | Dicumyl Peroxide | 0.1 | SBS | 10 | 50 | | | SPEM -8E408 | 10 | 3.5 | |
| Example 5 | 40 | | MAH | 0.5 | Dicumyl Peroxide | 0.1 | EPSA | 10 | 50 | | | SPEM -8E408 | 10 | 3.8 | |
| Example 6 | 40 | | MAH | 0.5 | Dicumyl Peroxide | 0.1 | EPSA | 10 | | 50 | | SPEM -8E408 | 5 | 5.4 | |
| Comparative example 2 | 40 | | MAH | 0.5 | Dicumyl Peroxide | 0.1 | SBS | 10 | 50 | | 3 | | | 10.6 | |
| Example 7 | 40 | | Citric acid | 0.5 | Dicumyl Peroxide | 0.1 | SEBS | 10 | 50 | | | SPEM -8E408 | 5 | 5.1 | |
| Example 8 | 40 | | Citric acid | 0.5 | Dicumyl Peroxide | 0.1 | SEBS | 10 | 50 | | 3 | Cu Powder | 1.5 | 7.6 | |
| Example 9 | NORYL GTX600 100 | | | | | | | | | | | SPEM -8E408 | 5 | 5.5 | |
| Comparative example 3 | NORYL GTX600 100 | | | | | | | | | | | | | 13.1 | 12 |
| Example 10 | XYLON A1400 100 | | | | | | | | | | | SPEM -8E408 | 5 | 5.3 | 20 |
| Example 11 | Same as example-3 with paint coated | | | | | | | | | | | | | 0.1 | |
| Comparative example 4 | Same as compartive example-2 with paint coated | | | | | | | | | | | | | 2.0 | |

## Claims

1. A resin composition having improved resistance to discoloration caused by exposure to light, which comprises (a) a polyphenylene ether alone or in combination with a styrene polymer, (b) a polyamide, (c) optionally one or more agents to improve the impact resistance, (d) optionally one or more agents to improve the compatibility of the polyphenylene ether and the polyamide, and (e) metal particles having a weight average particle size of 10 µm or less and an aspect ratio of 3 or more.

2. A resin composition according to claim 1 wherein the metal particles are selected from flakes or powders of aluminium, magnesium, zinc, nickel, stainless steel, chromium or copper.

3. A resin composition according to claim 1 or 2 wherein the polyamide is present in an amount from 35 percent by weight to 80 percent by weight based on the total weight of the polymeric components (a), (b) and (c).

4. A resin composition according to any one of claims 1 to 3 wherein the polyamide is selected from nylon 6, nylon 66, nylon 46, nylon 610, nylon 612, nylon 11 and nylon 12.

5. A resin composition according to any one of the preceding claims wherein the polyphenylene ether is selected from poly(2,6-dimethyl-1,4-phenylene) ether and a copolymer of 2,6-dimethylphenol and 2,3,6-trimethylphenol.

6. A resin composition according to any one of the preceding claims wherein the polyphenylene ether is present in an amount from 20 percent by weight to 65 percent by weight based on the total weight of the polymeric components (a), (b) and (c).

7. A resin composition according to any one of the preceding claims comprising a compatibilizing amount of one or more agents to improve the compatibility of the polyphenylene ether and the polyamide.

8. A resin composition according to any one of the preceding claims which has a non-extractable residue comprising polyphenylene ether and polyamide which is insoluble in chloroform and 2,2,2-trifluoroethanol and is present in an amount of more than 5 percent by weight based on the total weight of the polymeric components (a), (b) and (c).

9. A resin composition having improved resistance to discoloration caused by exposure to light, which comprises (a) polyphenylene ether alone or in combination with a styrene polymer, (b) a polyamide, (c) at least one agent to improve the impact resistance, (d) at least one agent to improve the compatibility of the polyphenylene ether and the polyamide, and (e) metal particles in an amount effective for improving the discoloration resistance of said resin composition, said metal particles having a weight average particle size of 10 µm or less and an aspect ratio of 3 or more and being present in the form of flakes or powders of at least one metal selected from aluminium, magnesium, zinc, nickel, stainless steel, chromium and copper.

10. A fabricated article for outdoor use made from a resin composition according to any one of the preceding claims.

11. A process of improving the resistance to discoloration caused by exposure to light of a resin composition comprising a polyphenylene ether and a polyamide, which process comprises incorporating metal particles having a weight average particle size of 10 µm or less and an aspect ratio of 3 or more in the resin composition.

## Patentansprüche

1. Harzzusammensetzung mit verbesserter Beständigkeit gegen Verfärbung, verursacht durch Einwirkung von Licht, welche umfaßt (a) einen Polyphenylenether, allein oder in Kombination mit einem Styrolpolymer, (b) ein Polyamid, (c) gegebenenfalls ein oder mehrere Mittel zur Verbesserung der Schlagzähigkeit, (d) gegebenenfalls ein oder mehrere Mittel zur Verbesserung der Verträglichkeit des Polyphenylenethers und des Polyamids und (e) Metallteilchen mit einem Gewichtsmittel der Teilchengröße von 10 µm oder weniger und einem Achsenverhältnis von 3 oder mehr.

2. Harzzusammensetzung nach Anspruch 1, worin die Metallteilchen ausgewählt sind aus Flocken oder Pulvern von Aluminium, Magnesium, Zink, Nickel, Edelstahl, Chrom oder Kupfer.

3. Harzzusammensetzung nach Anspruch 1 oder 2, worin das Polyamid in einer Menge von 35 Gewichtsprozent bis 80 Gewichtsprozent, bezogen auf das Gesamtgewicht der Polymerkomponenten (a), (b) und (c), vorhanden ist.

4. Harzzusammensetzung nach irgendeinem der Ansprüche 1 bis 3, worin das Polyamid ausgewählt ist aus Nylon 6, Nylon 66, Nylon 46, Nylon 610, Nylon 612, Nylon 11 und Nylon 12.

5. Harzzusammensetzung nach irgendeinem der vorangehenden Ansprüche, worin der Polyphenylenether ausgewählt ist aus Poly-(2,6-dimethyl-1,4-phenylen)ether und einem Copolymer von 2,6-Dimethylphenol und 2,3,6-Trimethylphenol.

6. Harzzusammensetzung nach irgendeinem der vorangehenden Ansprüche, worin der Polyphenylenether in einer Menge von 20 Gewichtsprozent bis 65 Gewichtsprozent, bezogen auf das Gesamtgewicht der Polymerkomponenten (a), (b) und (c), vorhanden ist.

7. Harzzusammensetzung nach irgendeinem der vorangehenden Ansprüche, umfassend eine verträglich-machende Menge eines oder mehrerer Mittel zur Verbesserung der Verträglichkeit des Polyphenylenethers und des Polyamids.

8. Harzzusammensetzung nach irgendeinem der vorangehenden Ansprüche, welche einen nicht-extrahierbaren Rest aufweist, umfassend Polyphenylenether und Polyamid, der in Chloroform und 2,2,2-Trifluorethanol unlöslich ist und in einer Menge von mehr als 5 Gewichtsprozent, bezogen auf das Gesamtgewicht der Polymerkomponenten (a), (b) und (c), vorhanden ist.

9. Harzzusammensetzung mit verbesserter Beständigkeit gegen Verfärbung, verursacht durch Einwirkung von Licht, welche umfaßt (a) einen Polyphenylenether, allein oder in Kombination mit einem Styrolpolymer, (b) ein Polyamid, (c) mindestens ein Mittel zur Verbesserung der Schlagzähigkeit, (d) mindestens ein Mittel zur Verbesserung der Verträglichkeit des Polyphenylenethers und des Polyamids und (e) Metallteilchen in einer Menge, ausreichend zur Verbesserung der Verfärbungsbeständigkeit der Harzzusammensetzung, welche Metallteilchen ein Gewichtsmittel der Teilchengröße von 10 µm oder weniger und ein Achsenverhältnis von 3 oder mehr aufweisen und in Form von Flocken oder Pulvern mindestens eines der Metalle, ausgewählt aus Aluminium, Magnesium, Zink, Nickel, Edelstahl, Chrom und Kupfer, vorliegen.

10. Bearbeiteter Gegenstand für den Außengebrauch, hergestellt aus einer Harzzusammensetzung nach irgendeinem der vorangehenden Ansprüche.

11. Verfahren zur Verbesserung der Beständigkeit gegen die durch Einwirkung von Licht verursachten Verfärbung einer Harzzusammensetzung, umfassend einen Polyphenylenether und ein Polyamid, welches Verfahren den Zusatz von Metallteilchen mit einem Gewichtsmittel der Teilchengröße von 10 µm oder weniger und einem Achsenverhältnis von 3 oder mehr zu der Harzzusammensetzung umfaßt.

**Revendications**

1. Composition de résine à résistance améliorée à la coloration provoquée par une exposition à la lumière qui comprend (a) un poly(oxyde de phénylène) seul ou en combinaison avec un polymère styrénique, (b) un polyamide, (c) éventuellement un ou plusieurs agents d'amélioration de la résistance au choc, (d) éventuellement un ou plusieurs agents d'amélioration de la compatibilité du poly(oxyde de phénylène) et du polyamide et (e) des particules métalliques ayant une dimension de particules moyenne en poids de 10 µm ou moins et un rapport d'aspect de 3 ou plus.

2. Composition de résine selon la revendication 1, dans laquelle les particules métalliques sont choisies parmi des paillettes ou des poudres d'aluminium, de magnésium, de zinc, de nickel, d'acier inoxydable, de chrome ou de cuivre.

3. Composition de résine selon la revendication 1 ou 2, dans laquelle le polyamide représente 35 % à 80 % du poids total des constituants polymères (a), (b) et (c).

4. Composition de résine selon les revendications 1 à 3, dans laquelle le polyamide est choisi parmi le nylon 6, le

nylon 66, le nylon 46, le nylon 610, le nylon 612, le nylon 11 et le nylon 12.

5. Composition de résine selon l'une quelconque des revendications précédentes, dans laquelle le poly(oxyde de phénylène) est choisi parmi le poly(oxyde de 2,6-diméthyl-1,4-phénylène) et un copolymère de 2,6-diméthylphénol et de 2,3,6-triméthylphénol.

6. Composition de résine selon l'une quelconque des revendications précédentes, dans laquelle le poly(oxyde de phénylène représente de 20 à 65 % du poids total des constituants polymères (a), (b) et (c).

7. Composition de résine selon l'une quelconque des revendications précédentes, comprenant une quantité donnant de la compatibilité d'un ou plusieurs agents de compatibilité du poly(oxyde de phénylène) et du polyamide.

8. Composition de résine selon l'une quelconque des revendications précédentes, qui a un résidu ne pouvant pas être extrait comprenant du poly(oxyde de phénylène et du polyamide qui est insoluble dans le chloroforme et le 2,2,2-trifluoroéthanol et qui représente plus de 5 % du poids total des constituants polymères (a), (b) et (c).

9. Composition de résine à résistance améliorée à la coloration provoquée par une exposition à la lumière qui comprend (a) un poly(oxyde de phénylène) seul ou en combinaison avec un polymère styrénique, (b) un polyamide, (c) au moins un agent d'amélioration de la résistance au choc, (d) au moins un agent d'amélioration de la compatibilité du poly(oxyde de phénylène) et du polyamide et (e) des particules métalliques en une quantité efficace pour améliorer la résistance à la coloration de la composition de résine, ces particules métalliques ayant une dimension de particules moyenne en poids de 10 µm ou moins et un rapport d'aspect de 3 ou plus et étant présentes sous la forme de paillettes ou de poudres d'au moins un métal choisi parmi l'aluminium, le magnésium, le zinc, le nickel, l'acier inoxydable, le chrome et le cuivre.

10. Objet fabriqué et destiné à être utilisé à l'extérieur en une composition de résine selon l'une quelconque des revendications précédentes.

11. Procédé d'amélioration de la résistance à la coloration provoquée par une exposition à la lumière d'une composition de résine comprenant un poly(oxyde de phénylène) et un polyamide, ce procédé consistant à incorporer des particules métalliques ayant une dimension de particules moyenne en poids de 10 µm ou moins et un rapport d'aspect de 3 ou plus à la composition de résine.